(19) Europäisches Patentamt
European Patent Office
Office européen des brevets

(11) Publication number: 0 281 994
A1

(12) # EUROPEAN PATENT APPLICATION

(21) Application number: 88103589.3

(51) Int. Cl.4: H01G 9/02

(22) Date of filing: 08.03.88

(30) Priority: 09.03.87 JP 51885/87
09.03.87 JP 51886/87

(43) Date of publication of application:
14.09.88 Bulletin 88/37

(84) Designated Contracting States:
DE FR GB

(71) Applicant: NIPPON CHEMI-CON CORPORATION
No. 167-1, Higashi Ome 1-chome
Ome-shi Tokyo 198(JP)

(72) Inventor: Tsuji, Tatsunori
Nippon Chemi-Con-Corp. 167-1, 1-chome
Higashi Ome
Ome-shi Tokyo 198(JP)
Inventor: Shimizu, Makoto
Nippon Chemi-Con-Corp. 167-1, 1-chome
Higashi Ome
Ome-shi Tokyo 198(JP)
Inventor: Shinozaki, Fumihiko
Nippon Chemi-Con-Corp. 167-1, 1-chome
Higashi Ome
Ome-shi Tokyo 198(JP)
Inventor: Yokoyama, Yutaka
Nippon Chemi-Con-Corp. 167-1, 1-chome
Higashi Ome
Ome-shi Tokyo 198(JP)

(74) Representative: Reitzner, Bruno, Dr. et al
Patentanwälte Dipl.-Ing. R. Splanemann Dr.
B. Reitzner, Dipl.-Ing. K. Baronetzky Tal 13
D-8000 München 2(DE)

(54) **An electrolyte for electrolytic capacitor.**

(57) There is disclosed an electrotlyte for electrolytic capacitor containing a carboxylic acid salt of a cationic nitrogen-containing heterocyclic compound as a solute within an aprotic solvent or a mixed solvent comprising major aprotic solvent and minor polyol solvent.

An electrolyte for electrolytic capacitor according to the present invention may conveniently be prepared in such a way that pyrrolidinium hydrogensulfate, piperidinium hydrogensulfate or pyridinium hydrogensulfate is dissolved in a solvent such as methyl acetate or methly chloride, and an equivalent amount of objective carboxylic acid is added, then an hydroxyalkali metal in two equivalent amounts is added to react, the depositions are removed to obtain an anhydrous salt by drying under vacumm and the resulting one is dissolved in a specific solvent in a concentration at which a desired conductivity may be obtained.

EP 0 281 994 A1

# AN ELECTROLYTE FOR ELECTROLYTIC CAPACITOR

The present invention relates to an electrolyte of high conductivity for electrolytic capacitor containing a carboxylic acid salt of a cationic nitrogen-containing heterocyclic compound as solute.

Conventionally, organic acids such as adipic acid or salts thereof being dissolved in polyols such as ethylen glycol are used for an electrolyte for electrolytic capacitor.

The electrolyte is inserted between a dielectric layer of an anode electrode and a current collector cathode electrode to provide a series resistance of an electrolytic capacitor. Accordingly, when the conductivity of the electrolyte is low,an equivalent series resistance within an electrolytic capacitor is increased to make a high-frequency characteristic and a loss characteristic bad. The latest expansion of demands of electrolytic capacitors having higher electric characteristics has not been satisfied with the conductivity of the present electrolyte. Especially in the case of the present electrolyte, a desired conductivity is hardly obtained by using a solute in a sufficiently high concentration, thus the conductivity has been inevitablly improved by adding a water intentionally. The addition of water causes an another problem in which the stability of the electric capacitor product in a high temperature is worsened. Accordingly, an electrolyte having a high conductivity and stability is always required.

Thus, an object of the present invention is to provide an electrolyte of non water or substantially non water system having high conductivity to improve electric characteristics of an electrolytic capacitor and to improve the reliability of an electric capacitor by maintaining stable characteristics for a long period.

Accordingly, the present invention provides an electrolyte for electrolytic capacitor containing a carboxylic acid salt of a cationic nitrogen-containing heterocyclic compound within an aprotic solvent or a mixed solvent comprising major aprotic solvent and minor polyol solvent, said cationic nitrogen-containing heterocyclic compound having a 5-or 6-membered heterocyclic ring containing one nitrogen atom.

The carboxylic acid salt of the cationic nitrogen-containing heterocyclic compound of the present invention is preferably a carboxylic acid salt of a pyrrolidinium compound having a general formula:

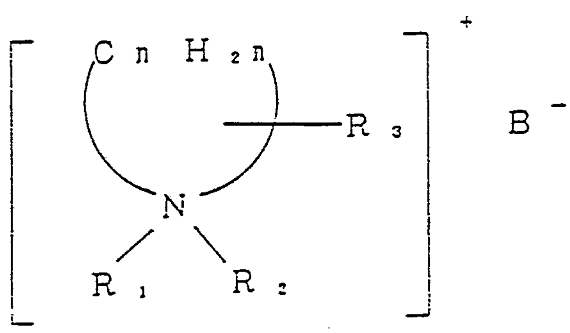

(wherein R1, R2 is an alkyl group having 1-6 carbon atoms or a phenyl group, R3 is hydrogen atom or an alkyl group having 1-6 carbon atoms, B is a carboxylic acid anion, n is 4).

Alternatively, the carboxylic salt of the cationic nitrogen-containing heterocyclic compound of the present invention may preferably be a carboxylic acid salt of a piperidinium compound having a general formula:

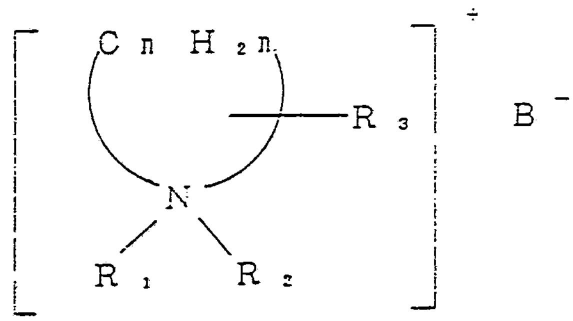

(wherein R1, R2 is an alkyl group having 1-6 carbon atoms or a phenyl gorup, R3 is hydrogen atom or an

alkyl gorup having 1-6 carbon atoms, B is carbocxylic acid anion, n is 5).

Alternatively, the carboxylic salt of the cationic nitrogen-containing heterocyclic compound of the present invention may preferably be a carboxylic acid salt of a pyridinium compound having a general formula:

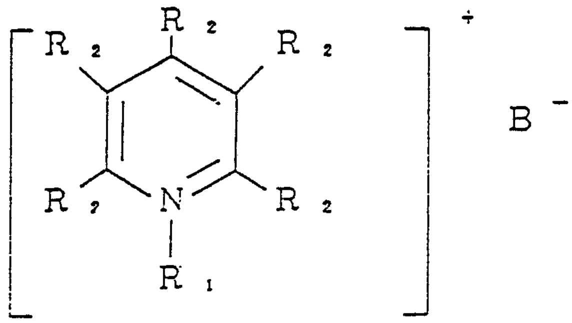

(wherein R1 is an alkyl group, an alkenyl goup having 1-6 carbon atoms or aryl group, R2 is hydrogen atom, an alkyl group having 1-6 carbon atoms or aryl goup, B is a carboxylic acid anion). The pyrrolidinium compound of the present invention includes, for example, N,N-dimethylpyrrolidinium, N,N-diethylpyrrolidinium, N,N-methylethylpyrrolidinium, N,N-methylphenylpyrrodidinium, N,N-dimethyl-2-methylpyrrolidinium and N,N-dimethyl-3-methylpyrrolidinium.

The piperidinium compound of the present invention incude, for example, N,N-dimethylpiperidinium, N,N-methylethyl-piperidinium, N,N-diethylpiperidinium, N,N-methylphenyl piperidinium, N,N-dimethyl-2-methylpiperidinium and N,N-dimethyl-3-methylpiperdinium.

The pyridinium compound of the present invention include, for example, N-methylpyridinium, N-ethylpyridinium, N-propenylpyridinium, N-phenyl pyridinium, N-methyl-2-methylpyridinium, N-methyl-3-methylpyridinium, N-methyl-4-pyridinium, N-ethyl-2,6-dimethylpyridinium, N-ethyl-2,5-dimethylpyridinium, N-phenyl-2,4-dimethylpyridinium, N-methyl-4-phenylpyridinium and N-methyl-3-propenylpyridinium.

The general organic carboxylic acid compounds may be used in the present invention. Preferably, the carboxylic acid of the present invention includes, for example, saturated aliphatic $\alpha\omega$-dicarboxylic acids, unsaturated dicarboxylic acids such as maleic acid, fumaric acid, methylmaleic acid, aromatic carboxylic acids such as benzoic acid, phthalic acid, isophtalic acid, $\gamma$-esorcylic acid, salicylic acid, hydroxy carboxylic acids such as glycolic acid, lactic acid, malic acid, citric acid, tartaric acid and saturated aliphatic monocarboxylic acid.

The aprotic sovent to be used in the present invention may be selected from the goup consisting of N-methylformamide, N,N-dimethylformamide, N-ethylformamide, N,N-diethylformamide, N-methylacetamide, N,N-dimethylacetamide, N-ethylacetamide, N,N-diethylacetamide, $\gamma$-butyrolactone, N-methyl-2-pyrrolidone, ethylene carbonate, propylene carbonate, dimethyl sulfoxide, acetonitrile and a mixture thereof, not being limited by them.

The polyol solvent to be used in the present invention may be selected from a group consisting of ethylene glycol, propyrene glycol, diethylene glycol, hexylene glycol, phenyl glycol, glycerol, erythritol, hexitol and a mixture thereof, not being limited by them. These polyols are added in a minimum amount for use in the case of obtaining a desired electrolyte having a high conductivity which may not be obtained with use of an aprotic solvent alone. Generally, these are added to an electrolyte in a concentration up to 30% by weight.

An electrolyte of the present invention is prepared in such a way that pyrrolidinium hydrogensulfate, piperidinium hydrogensulfate or pyridinium hydrogensulfate is dissolved in a solvent such as methyl acetate or methyl chloride, and an objective carboxylic acid in an equivalent amount is added, then an hydroxyalkali metal in two equivalent amount is added to react, the depositions being removed to obtain an anhydrous salt by drying under vacumm, the resulting one is dissolved in a specific solvent in a concentration at which a desired conductivity may be obtained. An electrolyte for electrolytic capacitor according to the present invention will be exemplified in the following.

(Examples 1-10 and Comparative test)

15% by weight solutions of several carboxylic acid salts of pyrrolidinium or piperidinium compounds dissolved in several solvents were prepared by the general preparing procedure as described in the foregoing for examples of the electrolyte for electrolytic capacitor of the present invention. Their conductivities are shown in Table 1. A conventional standard electrolyte (ethylene glycol 78% by weight, water 10% by weight, ammonium adipate 12% by weight) is also shown as a comparative one.

TABLE 1

| Example | Composition of electrolyte | Concentration | Conductivity |
|---|---|---|---|
| 1 | γ-butyrolactone<br>N,N-dimethylpyrrolidinium monosuccinate | 85<br>15 | 12.5 |
| 2 | N,N-dimethylformamide<br>ethylene glycol<br>N,N-dimethylpyrrolidinium monomalate | 75<br>10<br>15 | 17.5 |
| 3 | N-methylformamide<br>N,N-methylethyl-pyrrolidinium monophthalate | 85<br>15 | 15.9 |
| 4 | N-methyl-2-pyrrolidone<br>N,N-methyletyl-2-methyl-pyrrolidinium glycolate | 85<br>15 | 10.1 |

| | | | |
|---|---|---|---|
| 5 | acetonitrile<br>ethylene glycol<br>N,N-methylphenyl-<br>pyrrolidinium acetate | 55<br>30<br>15 | 20.0 |
| 6 | γ-butyrolactone<br>N,N-diethylpiperidinium<br>monosuccinate | 85<br>15 | 11.3 |
| 7 | N,N-dimethylformamide<br>ethylene glycol<br>N,N-diethylpiperidinium<br>monomalate | 75<br>10<br>15 | 15.5 |
| 8 | N-methylformamide<br>N,N-dimethylpiperidinium<br>monophthalate | 85<br>15 | 14.3 |
| 9 | N-methyl-2-pyrrolidone<br>N,N-dimethyl-2-methyl-<br>piperidinium glycolate | 85<br>15 | 9.3 |
| 10 | acetonitrile<br>ethylene glycol<br>N,N-methylpheny-<br>piperidinium acetate | 55<br>30<br>15 | 18.1 |
| Compara-<br>tive | ethylene glycol<br>water<br>ammonium adipate | 78<br>10<br>12 | 6.7 |

As understandable from the result as hereinbefore described, the electrolyte of the present invention represents a high conductivity as compared with the conventional one, enabling the selection of wide range conductivity.

Electrolytic capacitors were then made using these electrolytes to compare their properties.

Electrolytic capacitors were made in such a way that aluminium foil is uded for both anode and cathode to make a cylindrical capacitor element by inserting a separator paper to superpose before rolling, the

capacitor element being impregnated with electrolytes of each example to be introduced into an external case and sealed.

The results were obtained as mean values from ten times determination using the same capacitor element, rated voltage 16V and rated capacity 47μF.

The following Table 2 shows their initial values and electrostatic capacity (CAP), tangential loss angle (tan δ ) and leakage current (LC) (value at 2 minutes) after 1000 hours operation at 110°C with the rated voltage.

TABLE 2

| Example | Initial value | | | After 1000 hours | | |
|---|---|---|---|---|---|---|
| | CAP (μF) | tan δ | LC (μA) | CAP Δ(%) | tan δ | LC (μA) |
| 1 | 65.3 | 0.062 | 0.29 | -2.0 | 0.074 | 0.22 |
| 2 | 65.3 | 0.052 | 0.22 | -0.4 | 0.063 | 0.19 |
| 3 | 65.4 | 0.055 | 0.26 | -1.3 | 0.056 | 0.23 |
| 4 | 63.2 | 0.068 | 0.35 | -5.2 | 0.082 | 0.31 |
| 5 | 65.7 | 0.046 | 0.30 | -2.2 | 0.061 | 0.26 |
| 6 | 65.2 | 0.065 | 0.27 | -1.8 | 0.078 | 0.20 |
| 7 | 65.4 | 0.056 | 0.25 | -0.3 | 0.068 | 0.21 |
| 8 | 65.3 | 0.058 | 0.26 | -1.1 | 0.061 | 0.22 |
| 9 | 63.1 | 0.070 | 0.33 | -4.7 | 0.084 | 0.27 |
| 10 | 65.6 | 0.050 | 0.28 | -2.0 | 0.066 | 0.22 |
| Comparative | 62.9 | 0.075 | 0.41 | -12.6 | 0.113 | 0.37 |

As understandable from the result above, the electrolytes for electrolytic capacitor of the present invention have lower capacitor losses or (tan δ) as compared with the conventional one owing to their higher conductivity.

Furthermore, ethylene glycol may be used as a solvent without any abnormal exterior owing to the increase of the internal pressure, and without any decrease of the electrostatic capacity, being used at an extent of 30% by weight against the electrolyte even in the load situation at a high temperature. Those of the present invention shows the extremely few change of the characteristic values in comparison of the initial value with the value after 1000 hours.

(Examples 11-15 and Comparative test)

15% by weight solutions of several carboxylic acid salts of pyridinium compounds dissolved in several solvents were prepared by the general preparing method as hereinbefore described for examples of the electrolyte for the electrolytic capacitor according to the present invention. Their conductivities are shown in Table 3. A conventional standard electrolyte (ethylene glycol 78% by weight, water 10% by weight, ammonium adipate 12% by weight) is also shown as a comparative one.

TABLE 3

| Example | Composition of electrolyte | Concentration (% b.w.) | Conductivity (ms/cm) |
|---|---|---|---|
| 11 | γ-butyrolactone<br>N-methylpyridinium-monosuccinate | 85<br>15 | 11.2 |
| 12 | N,N-dimethylformamide<br>ethylene glycol<br>N-ethylpyridinium-monomalate | 75<br>10<br>15 | 16.3 |
| 13 | N-methylformamide<br>N-propenylpyridinium-monophthalate | 85<br>15 | 14.2 |
| 14 | N-methyl-2-pyrrolidone<br>N-methyl-2-phenylpyridium-glycolate | 85<br>15 | 8.2 |
| 15 | acetonitrile<br>ethylene glycol<br>N-phenyl-2,6-dimethyl-pyridinium acetate | 55<br>30<br>15 | 15.4 |
| Comparative | ethylene glycol<br>water<br>ammonium adipate | 78<br>10<br>12 | 6.7 |

As understandable from the result as described, the electrolyte of the present invention represents a high conductivity as compared with the conventional one, enabling the selection of wide range conductivity.

Electrolytic capacitors were then made using these electrolytes to compare their properties.

Electrolytic capacitors were made in such a way that an aluminium foil is used for both anode and cathode to make a cylindrical capacitor element by inserting a separator paper to superpose before rolling, the capacitor element being impregnated with electrolytes of each example to be inroduced into an external

case and sealed.

The results were obtained as mean values from ten times determination using the same capacitor element, rated voltage 16V and rated capacity 47µF.

The following Table 4 shows their intial values and electrostatic capacity (CAP), tangential loss angle (tan δ) and leakage current (LC) (value at 2 minutes) after 1000 hours operation at 110°C with the rated voltage.

TABLE 4

| Example | Initial value | | | After 1000 hours | | |
|---|---|---|---|---|---|---|
| | CAP (µF) | tan δ | LC (µA) | CAP Δ (%) | tan δ | LC (µA) |
| 11 | 65.2 | 0.065 | 0.30 | -2.5 | 0.075 | 0.26 |
| 12 | 65.4 | 0.054 | 0.23 | -0.9 | 0.065 | 0.19 |
| 13 | 65.3 | 0.059 | 0.30 | -1.7 | 0.062 | 0.24 |
| 14 | 63.2 | 0.072 | 0.40 | -6.4 | 0.087 | 0.37 |
| 15 | 65.3 | 0.056 | 0.35 | -2.8 | 0.083 | 0.31 |
| Comparative | 63.0 | 0.076 | 0.43 | -12.1 | 0.110 | 0.38 |

As understandable from the result described, the electrolytes for the electrolytic capacitor of the present invention have lower capacitor losses or (tan δ) as compared with the conventional one owing to their higher conductivity.

Furthermore, an ethylene glycol may be used as a solvent without any abnormal exterior owing to the increase of the internal pressure, and without any decrease of the electrastatic capacity, being used at an extent of 30% by weight against the electrolyte even in the load situation at a high temperature. Those of the present invention shows the extremely few change of the characteristic values in comparison of the initial value with the value after 1000 hours.

The electrolyte according to the present invention may provide the electrolytic capacitor for the power device such as the switching regulator used at high frequency and requiring high efficiency and for various electrical machineries and apparatus used at high temperature for a long term because of the maintenances of the lower capacitor losses and the stable characteristic used at high temperature for a long term.

**Claims**

1. An electrolyte for electrolytic capacitor containing a carboxylic acid salt of a cationic nitrogen-containing heterocyclic compound within an aprotic solvent or a mixed solvent comprising major aprotic solvent and minor polyol solvent, said cationic nitrogen-containing heterocyclic compound having a 5-or 6-membered heterocyclic ring containing one nitrogen atom.

2. An electrolyte for electrolytic capacitor according to claim 1, wherein the carboxylic acid salt of cationic nitrogen-conataining heterocyclic compound is a carboxylic acid salt of a pyrrolidinium compound having a general formula:

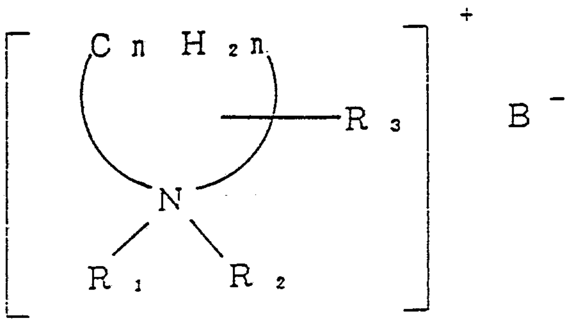

(wherein R1, R2 is an alkyl group having 1-6 carbon atoms or a phenyl group, R3 is hydrogen atom or an alkyl group having 1-6 carbon atoms, B is a carboxylic acid anion, n is 4).

3. An electrolyte for electrolytic capacitor according to claim 1, wherein the carboxylic acid salt of cationic nitrogen-containing heterocyclic compound is a carboxylic acid salt of a piperidinium compound having a general formula:

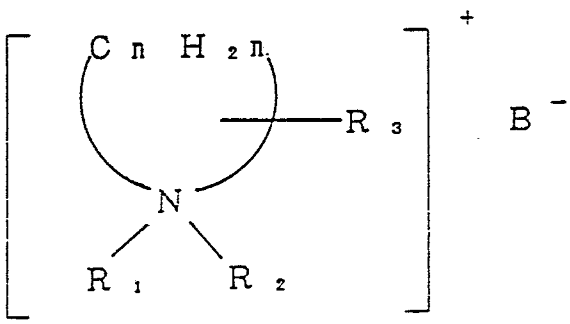

(wherein R1, R2 is an alkyl group having 1-6 carbon atoms or a phenyl group, R3 is hydrogen atom or an alkyl group having 1-6 carbon atoms, B is a carboxylic acid anion, n is 5).

4. An electrolyte for electrolytic capacitor according to claim 1, wherein the carboxylic acid salt of cationic nitrogen-containing heterocyclic compound is a carboxylic acid salt of a pyridinium compound haivng a general formula:

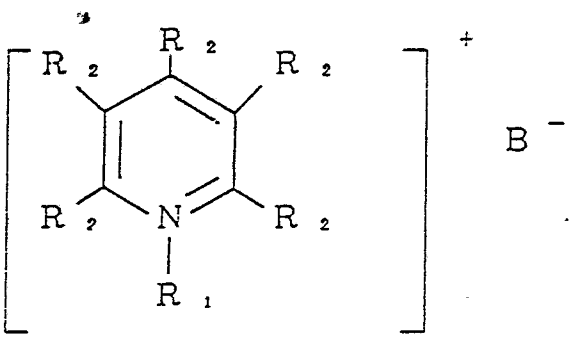

(wherein R1 is an alkyl group, an alkenyl group having 1-6 carbon atoms or aryl group, R2 is hydrogen atom, an alkyl group having 1-6 carbon atoms or aryl group, B is a carboxylic acid anion).

5. An electrolyte for electrolytic capacitor according to any preceding claims wherein an aprotic solvent is selected from a group consisting of N-methylformamide, N,N-dimethylformamide, N-ethylformamide, N,N-diethylformamide, N-methylacetamide, N,N-dimethylacetamide, N-ethylacetamide, N,N-diethylacetamide, γ-butyrolactone, N-methyl-2-pyrrolidone, ethylene carbonate, propylene carbonate, dimethyl sulfoxide, acetonitrile and a mixture thereof.

6. An electrolyte for electrolytic capacitor according to any preceding claims, wherein a polyol solvent is selected from a group consisting of ethylene glycol, propyrene glycol, diethylene glycol, hexylene glycol, phenyl glycol, glycerol, erythritol, hexitol and a mixture thereof.

European Patent Office

# EUROPEAN SEARCH REPORT

Application Number

EP 88 10 3589

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | EP-A-0 263 182 (SANYO CHEMICALS INDUSTRIES LTD)<br>* Page 9, line 23 - page 4, line 15; page 5, line 20 - page 6, line 11; page 6, line 22 - page 8, line 4 *<br>--- | 1-3,5-6 | H 01 G 9/02 |
| A | DE-B-1 267 347 (SPRAGUE ELECTRIC CO.)<br>--- | | |
| A | DE-A-2 009 919 (ERO-TANTAL KONDENSATOREN GmbH)<br>----- | | |
| | | | TECHNICAL FIELDS SEARCHED (Int. Cl.4) |
| | | | H 01 G |

The present search report has been drawn up for all claims

| Place of search | Date of completion of the search | Examiner |
|---|---|---|
| THE HAGUE | 16-06-1988 | SCHUERMANS N.F.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)